# EUROPÄISCHE PATENTSCHRIFT

(11) **EP 4 102 194 B1**
(45) Veröffentlichungstag und Bekanntmachung des Hinweises auf die Patenterteilung: **26.07.2023**
(21) Anmeldenummer: 21178038.2
(22) Anmeldetag: 07.06.2021
(51) Int. Cl.: G01F 23/284, G01S 13/88

(54) **FÜLLSTANDRADAR MIT VERÄNDERLICHER QUANTISIERUNGSGENAUIGKEIT**
FILL LEVEL RADAR WITH VARIABLE QUANTIZATION ACCURACY
RADAR DE NIVEAU DE REMPLISSAGE À PRÉCISION DE QUANTIFICATION CHANGEANTE

(43) Veröffentlichungstag der Anmeldung: 14.12.2022
(73) Patentinhaber: VEGA Grieshaber KG, 77709 Wolfach (DE)
(72) Erfinder: WELLE, Roland, 77756 Hausach (DE); KLEISER, Samuel, 77723 Gengenbach (DE)
(74) Vertreter: Maiwald GmbH

(56) Entgegenhaltungen:
- EP-A1- 2 418 465
- EP-A2- 0 573 034
- EP-A2- 0 882 956
- DE-A1- 4 308 373
- DE-A1- 10 249 544
- US-A- 5 969 664

## Beschreibung

Die Erfindung betrifft ein Verfahren zum Einstellen einer Quantisierungsgenauigkeit eines Füllstandradars oder eines Ultraschallmessgeräts. Weiterhin betrifft die Erfindung ein Feldgerät, ein Programmelement, ein computerlesbares Medium und eine Verwendung.

### Hintergrund

Füllstandradargeräte messen die Entfernung zu einem Füllgut mittels einer Sensorik, die auf einer Auswertung der Laufzeit abgestrahlter Radarsignale und/oder Ultraschallsignale basiert. Weil die Füllstandradargeräte in zumindest einigen Fällen als Feldgeräte, z.B. als autonome Feldgeräte, ausgeführt sind, kann der Energieverbrauch der Sensorik und/oder weiterer Komponenten des Feldgeräts kritisch sein. Eine Maßnahme, die den Energieverbrauch des Feldgeräts in zumindest einigen Situationen reduziert, ist also wünschenswert.

Das Dokument EP 2 418 465 A1 bezieht sich auf ein Verfahren und eine Elektronikeinheit zur Messung von Füllständen.

### Zusammenfassung

Es ist Aufgabe der Erfindung, den Energieverbrauch des Feldgeräts in zumindest einigen Situationen zu reduzieren. Diese Aufgabe wird durch den Gegenstand der unabhängigen

Patentansprüche gelöst. Weiterbildungen der Erfindung ergeben sich aus den Unteransprüchen und der folgenden Beschreibung.

Wenn im Rahmen der vorliegenden Beschreibung von einer Quantisierungsgenauigkeit die Rede ist, so bezieht sich dies auf eine Amplituden-Quantisierungsgenauigkeit des Füllstandradars.

Ein Aspekt betrifft ein Verfahren zum Einstellen einer Quantisierungsgenauigkeit eines Füllstandradars zum Ermitteln eines Füllstands eines Behälters, mit den Schritten:
Erfassen von Amplitudenwerten einer Echokurve des Füllstandradars mittels eines Analog-Digital-Wandlers, ADC;
Bestimmen eines ersten Amplitudenwerts eines ersten Echos, das eine höchste Amplitude oder ein höchstes lokales Amplitudenmaximum der Echokurve aufweist;
Bestimmen eines zweiten Amplitudenwerts eines zweiten Echos, das ein niedrigstes lokales Amplitudenmaximum der Echokurve aufweist; und
Einstellen einer angepassten Quantisierungsgenauigkeit als Funktion eines Quotienten aus dem ersten Amplitudenwert und dem zweiten Amplitudenwert, um mit der angepassten Quantisierungsgenauigkeit einen Füllstand eines Behälters zu ermitteln.

Dabei wird unter einer Quantisierungsgenauigkeit eine "maximale Auflösung" und/oder eine "(effektive) Messgenauigkeit" der Sensorik und/oder des Messgeräts verstanden. Die Quantisierungsgenauigkeit kann also beispielsweise die Sensorik, eine Verarbeitungsstrecke, eine Übertragungsstrecke und/oder weitere Komponenten des Messgeräts betreffen. Die Sensorik kann z.B. als Füllstandradar ausgeführt sein, das ein Puls-Laufzeit-Verfahren und/oder ein Dauerstrichradar-Verfahren verwendet. Die Sensorik kann z.B. zur Messung eines Füllstands und/oder zur Bestimmung einer Topologie eines Füllguts verwendet werden. Die Sensorik kann z.B. auch als Ultraschallmessgerät ausgeführt sein. Auch wenn Aspekte des Ultraschallmessgeräts im Folgenden nicht mehr explizit erwähnt werden, so gilt das Folgende, in entsprechend angepasster Weise, auch für Ultraschallmessgeräte. Das Messgerät kann als Feldgerät, insbesondere als autonomes Feldgerät, ausgeführt sein. Das Messgerät kann beispielsweise in einem Behälter, z.B. einem Gefäß oder einem Messtank von beliebiger Form, oder auch an oder über einem Gerinne, beispielsweise einem Bach- oder Flussbett, angeordnet sein.

Die Sensorik weist mindestens einen Analog-Digital-Wandler, ADC (Analog Digital Converter), auf. Der ADC kann eine vordefinierte und/oder eingestellte Abtastgenauigkeit oder Quantisierungsgenauigkeit aufweisen, z.B. 14 Bit oder eine andere Auflösung. Die Abtastgenauigkeit kann fest oder einstellbar sein. Der ADC kann Werte vom Sensor - d.h. die Echosignale - direkt abtasten, oder unter Verwendung einer oder mehrerer Zwischenstufe(n), beispielsweise einer Erzeugung einer Zwischenfrequenz, die Werte vom Sensor "indirekt" abtasten. Die Häufigkeit der Messungen kann von einer Füllstandänderungsgeschwindigkeit abhängig sein, d.h. bei häufigen Änderungen des Füllstands kann eine häufigere Messung sinnvoll sein.

Die Echosignale bestehen aus einer Sequenz von Amplitudenwerten, wobei die Amplitudenwerte in vielen Fällen als Ordinate (z.B. in dB, Dezibel, oder in V, Volt) über einer Entfernung oder einer Abtastzeit (Distanz d, oder Zeit t, als Abszisse) von der Antenne angetragen werden. Lokale Maxima der Amplitudenwerte können durch Reflexionen von dem Füllgut, z.B. von der Füllgutoberfläche, von Einbauten in dem Behälter, von der Antenne (z.B. bei Verwendung einer Hornantenne) und/oder durch Reflexionen von anderen Gegenständen in oder an dem Behälter verursacht sein. Lokale Maxima der Amplitudenwerte werden oft als "Echos" bezeichnet. Wenn der Behälter eine größere Tiefe aufweist, beispielsweise mehrere Meter, dann kann das Echo - wegen der weiten zu durchquerenden Strecke - von einem Boden des Behälters besonders schwach sein, d.h. einen besonders niedrigen Amplitudenwert aufweisen, und/oder es kann eine höhere Sendeenergie erforderlich sein, um ein (gut) messbares Echo zu erhalten. Ein Amplitudenwert eines Echos, das eine höchste Amplitude der Echokurve aufweist, kann um mehrere Größenordnungen höher sein als ein Amplitudenwert eines Echos, das ein niedrigstes lokales Amplitudenmaximum der Echokurve aufweist. Ein ADC kann eine Auflösung oder Quantisierungsgenauigkeit aufweisen, durch die es möglich ist, das niedrigste lokale Amplitudenmaximum von einem "Grundrauschen" der Echosignale - das z.B. von diffusen Reflexionen von den Behälterwänden, von der Sensorik und/oder anderweitig erzeugt wird - zu unterscheiden.

Der erste Amplitudenwert des ersten Echos kann eine höchste Amplitude der Echokurve aufweisen. Dabei kann die höchste Amplitude beispielsweise von der Antenne, z.B. von den Wänden einer Hornantenne, erzeugt werden, weil diese Signale von einem besonders nahen Reflexionsgegenstand reflektiert werden und deshalb - wegen des kurzen zurückgelegten Wegs - eine nur geringe Abschwächung aufweisen. Der erste Amplitudenwert des ersten Echos kann ein höchstes lokales Amplitudenmaximum der Echokurve aufweisen. Das höchste lokale Amplitudenmaximum kann ein höchstes "nützliches" Amplituden-Maximum sein, beispielsweise der höchste sinnvoll messbare Füllstand. In einer Ausführungsform kann das höchste lokale Amplitudenmaximum als "Bezugspunkt" gewählt werden und damit ein "Übersteuern" bei Messung der höchsten Amplitude der Echokurve in Kauf genommen werden. Der zweite Amplitudenwert des zweiten Echos kann der niedrigsten "nützlichen" oder "produktiven" Amplitude der Echokurve entsprechen.

Damit kann die angepasste Quantisierungsgenauigkeit als Funktion eines Quotienten aus dem ersten Amplitudenwert und dem zweiten Amplitudenwert eingestellt werden. Die folgenden Messungen und/oder Auswertungen können mit dieser angepassten Quantisierungsgenauigkeit durchgeführt werden. Dabei kann die Quantisierungsgenauigkeit an mehreren Stellen angepasst bzw. reduziert werden, beispielsweise durch Veränderung der Auflösung des ADC und/oder bei der Berechnung im Prozessor, bei der Übertragung der Messwerte und/oder an weiteren Stellen bzw. bei weiteren Komponenten des Messgeräts. Das Einstellen der angepassten Quantisierungsgenauigkeit kann nach jeder Messung erfolgen, nach einer (z.B. vordefinierten) Anzahl an Messungen und/oder in Abhängigkeit einer Veränderung des Quotienten aus dem ersten Amplitudenwert und dem zweiten Amplitudenwert.

Damit kann das Verfahren vorteilhafterweise besonders geeignet sein zur Anpassung einer Quantisierungsgenauigkeit an eine Messsituation. Insbesondere kann dadurch eine Balance erreicht werden zwischen einer "genauen" Abtastung, d.h. mit hoher Auflösung oder hoher Quantisierungsgenauigkeit, und einer geringen Verarbeitungsrate (z.B. im Prozessor) und/oder Übertragungsrate, z.B. in einer drahtgebundenen und/oder drahtlosen Kommunikationseinheit. Durch diese Anpassung bzw. durch dieses Einstellen kann der Energieverbrauch des Feldgeräts - bzw. von mehreren Komponenten des Feldgeräts - bei dem Ermitteln des Füllstands eines Behälters, in zumindest einigen Situationen reduziert werden. Zum Beispiel kann dadurch die Betriebszeit der Hochfrequenzschaltung so kurz wie möglich gehalten werden und/oder die Übertragungszeit der Messwerte reduziert werden. Weil jahrelange Auswertungen gezeigt haben, dass besonders bei kleinen Behältern schnelle Füllstandänderungsgeschwindigkeiten typisch sind, kann dieses automatisierte Einstellen der angepassten Quantisierungsgenauigkeit eine besonders eindrucksvolle Balance zwischen einer angepassten Quantisierungsgenauigkeit - die bei dieser Messsituation eine geringe Auflösung aufweisen kann - und einer hohen Messrate (die wegen des niedrigeren Energieverbrauchs und/oder einer kürzeren Quantisierungszeit möglich wird) aufweisen.

In einer Ausführungsform wird das Erfassen der Amplitudenwerte mit einer maximalen Quantisierungsgenauigkeit des ADC durchgeführt. Dabei findet erst in einem Register, z.B. des Prozessors oder eines Zwischenspeichers, eine Reduzierung der Quantisierungsgenauigkeit statt. Für diese Ausführungsform können vorteilhafterweise ADCs verwendet werden, die für jede Messung dieselbe Quantisierungsgenauigkeit aufweisen.

In einer Ausführungsform wird das Erfassen der Echokurve mit der angepassten Quantisierungsgenauigkeit des letzten Einstellens des ADC durchgeführt. Dabei kann bei zumindest einigen ADCs die Quantisierungszeit reduziert werden. Dies kann insbesondere vorteilhaft sein, wenn nur kurze Entfernungen zur Füllgutoberfläche von dem Radarsignal zurückgelegt werden. Dabei kann ein Speicher die Abtastgenauigkeit der letzten Messung enthalten. Der Speicher kann ggf. eine Historie der Abtastgenauigkeit umfassen, um die Messung robuster zu machen.

In einigen Ausführungsformen wird eine Verarbeitungsstrecke und/oder eine Übertragungsstrecke mit der angepassten Quantisierungsgenauigkeit betrieben. Die Verarbeitungsstrecke kann z.B. einen Prozessor und/oder eine Steuereinheit des Feldgeräts umfassen. Die Übertragungsstrecke kann z.B. drahtgebunden und/oder drahtlos ausgeführt sein. Dadurch kann der Energieverbrauch des Feldgeräts weiter reduziert werden.

In einigen Ausführungsformen kann die Übertragungsstrecke drahtgebunden und/oder drahtlos ausgeführt sein. Dabei können beispielsweise Protokolle wie das HART-Protokoll (HART: Highway Addressable Remote Transducer), die IO-Link Schnittstelle, Ethernetbasierte Protokolle wie z.B. Ethernet-APL (Ethernet Advanced Physical Layer) und/oder drahtlose Protokolle wie z.B. ein Wireless Personal Area Network (WPAN), Wireless LAN (WLAN) und/oder ein Niedrigenergieweitverkehrnetzwerk (LPWAN, Low Power Wide Area Network) unterstützt werden.

In einigen Ausführungsformen ist die angepasste Quantisierungsgenauigkeit eine logarithmische Funktion des Quotienten aus dem ersten Amplitudenwert und dem zweiten Amplitudenwert. Die Funktion kann einen Sicherheitsabstand beinhalten, so dass vorteilhafterweise eine klare Trennung zwischen dem niedrigsten lokalen Amplitudenmaximum der Echokurve und dem "Grundrauschen" der Echosignale möglich ist.

In einigen Ausführungsformen ist die angepasste Quantisierungsgenauigkeit eine Funktion einer Distanz zwischen einer Anzahl von führenden Nullen des ersten Amplitudenwertes und einer Anzahl von führenden Nullen des zweiten Amplitudenwertes. Damit kann insbesondere bei Prozessoren, die Bitbefehle unterstützen, eine besonders schnelle Ermittlung des Quotienten durchgeführt werden.

In einigen Ausführungsformen wird das Erfassen der Echokurve mittels eines ersten ADC und eines zweiten ADC (und/oder weiterer ADCs) zeitlich alternierend durchgeführt. Dabei wechseln sich die ADCs ab bei der Abtastung der Messwerte (Interleaving). Bei mehr als zwei ADCs kann dies z.B. ringweise erfolgen. Dies kann besonders vorteilhaft bei einer schnellen Veränderung des Füllstands sein.

In einigen Ausführungsformen erfasst der ADC (oder die ADCs) ein Zwischenfrequenzsignal mit Amplitudenwerten der Echokurve des Füllstandradars. Dies kann zu einer einfacheren Verarbeitung der Messwerte beitragen, weil das Zwischenfrequenzsignal eine niedrigere und/oder konstante Basisfrequenz aufweisen kann. Eine weitere Verarbeitung dieser digitalen Repräsentation kann anschließend von einem Mikroprozessor weiterverarbeitet werden.

In einigen Ausführungsformen verwendet das Füllstandradar ein Puls-Laufzeit-Verfahren und/oder ein Dauerstrichradar-Verfahren. Dabei werden bei Füllstandmessgeräten nach dem Puls-Laufzeit-Verfahren zeitlich kurze Hochfrequenzimpulse von einem Sendeoszillator erzeugt, mit Hilfe einer Sendeantenne in Richtung eines Füllgutes abgestrahlt, an dem Füllgut reflektiert und die reflektierten Signale oder Echos von dem Messgerät, d.h. von einer Empfangsantenne (die gleich der Sendeantenne sein kann), wieder empfangen. Zur weiteren Auswertung der Signale können eine oder mehrere Zwischenstufe(n) verwendet werden, die beispielsweise die Erzeugung eines (niederfrequenteren) Zwischenfrequenzsignals beinhalten können.

Bei Füllstandmessgeräten nach dem Dauerstrichradar-Verfahren oder FMCW-Verfahren (FMCW: frequency modulated continuous wave radar) wird z.B. von einem spannungsgesteuerten Hochfrequenzoszillator (VCO: voltage-controlled oscillator), der mittels einer angelegten Spannung die Frequenz verändern kann, ein frequenzmoduliertes Hochfrequenzsignal erzeugt, und über eine Sendeantenne des Messgerätes in Richtung eines Füllgutes abgestrahlt. Nach erfolgter Reflektion der Radarsignale am Füllgut werden diese Echos von einer Empfangsantenne (die gleich der Sendeantenne sein kann), des Messgeräts empfangen. Zur weiteren Auswertung der Signale können eine oder mehrere Zwischenstufe(n) verwendet werden, die beispielsweise einen Hochfrequenzmischer beinhalten können, der die Echosignale mit einem über einen Hochfrequenzkoppler ausgekoppelten Anteil des aktuell vom VCO erzeugten Sendesignals mischt. Das dabei entstehende, niederfrequente analoge Differenzfrequenzsignal kann Frequenzanteile aufweisen, welche direkt vom Zeitversatz zwischen gesendetem Signal und aktuell erzeugtem Signal und damit von der Laufzeit des Radarsignals vom Sensor zum Reflektor und zurück abhängig sind. Zur weiteren Verarbeitung des erfassten Analogsignals, insbesondere unter Verwendung einer Spektralanalyse, kann dieses mit einem ADC in eine digitale Repräsentation überführt und einem Mikroprozessor zur weiteren Auswertung zugeführt werden.

Ein Aspekt betrifft ein Feldgerät, aufweisend ein Füllstandradar und/oder ein Ultraschallmessgerät, das dazu eingerichtet ist, ein Verfahren wie oben und/oder nachfolgend beschrieben durchzuführen.

Ein Aspekt betrifft eine Verwendung eines Feldgeräts wie oben und/oder nachfolgend beschrieben zur Messung eines Füllstands und/oder zur Bestimmung einer Topologie eines Füllguts. Dies kann z.B. in einem Behälter, einem Gerinne oder einer Halde durchgeführt werden.

Ein Aspekt betrifft ein Programmelement, welches, wenn es auf einer Recheneinheit eines Feldgeräts und/oder auf einer anderen Recheneinheit ausgeführt wird, die Recheneinheit anweist, das Verfahren wie oben und/oder nachfolgend beschrieben durchzuführen.

Ein Aspekt betrifft ein computerlesbares Medium, auf dem das hier beschriebene Programmelement gespeichert ist.

Es sei noch angemerkt, dass die verschiedenen Ausführungsformen miteinander kombiniert werden können.

Zur weiteren Verdeutlichung wird die Erfindung anhand von in den Figuren abgebildeten Ausführungsformen beschrieben. Diese Ausführungsformen sind nur als Beispiel, nicht aber als Einschränkung zu verstehen.

### Kurze Beschreibung der Figuren

Dabei zeigt:
- **Fig. 1a**: schematisch eine Messung gemäß einer Ausführungsform bei einem fast leeren Behälter;
- **Fig. 1b**: schematisch eine Messung gemäß einer Ausführungsform bei einem nahezu gefüllten Behälter;
- **Fig. 2**: schematisch einen internen Aufbau eines Radarfüllstandmessgerätes gemäß einer Ausführungsform;
- **Fig. 3a** bis **3f**: schematisch Auswirkungen eines Einstellens einer unterschiedlichen Quantisierungsgenauigkeit gemäß einer Ausführungsform;
- **Fig. 4**: schematisch einen internen Aufbau eines Radarfüllstandmessgerätes gemäß einer weiteren Ausführungsform;
- **Fig. 5**: schematisch einen internen Aufbau eines Radarfüllstandmessgerätes gemäß einer weiteren Ausführungsform;
- **Fig. 6**: schematisch das Abtasten einer Echokurve mit zwei ADCs gemäß einer Ausführungsform;
- **Fig. 7**: ein Flussdiagramm mit einem Verfahren gemäß einer Ausführungsform;
- **Fig. 8**: ein Flussdiagramm mit einem Verfahren gemäß einer weiteren Ausführungsform.

### Detaillierte Beschreibung von Ausführungsformen

Einige der gezeigten Ausführungsbeispiele verdeutlichen Aspekte der vorliegenden Erfindung anhand eines nach einem Puls-Laufzeit-Verfahren arbeitenden Radarmessgerätes. Das Beschriebene gilt, in übertragener Art und Weise, auch für Radarmessgeräte, welche nach dem FMCW-Prinzip arbeiten, und/oder für Ultraschallmessgeräte.

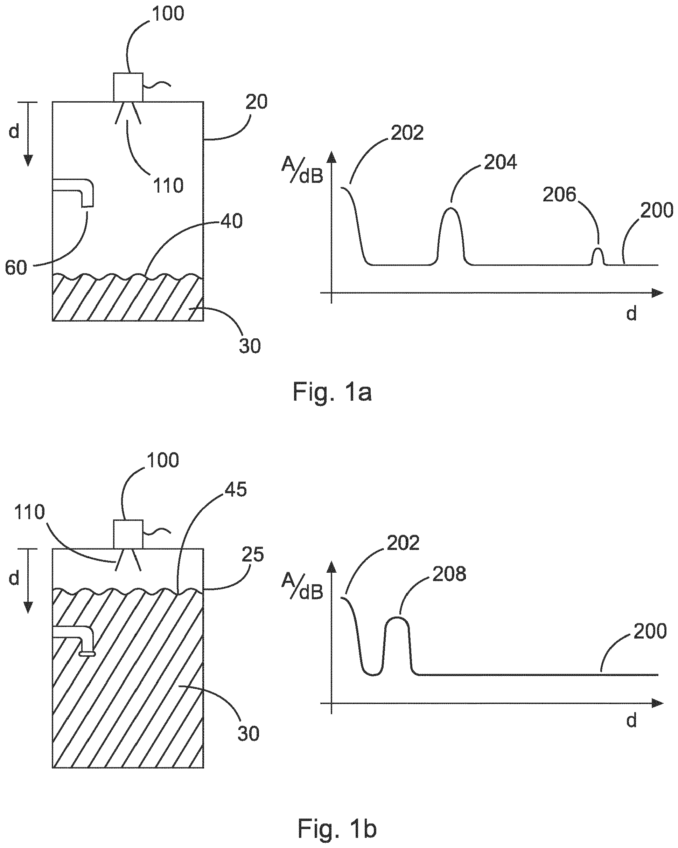

**Fig. 1a** zeigt schematisch eine Messung gemäß einer Ausführungsform bei einem fast leeren Behälter 20. Dabei erfasst ein Füllstandmessgerät 100, mit Hilfe einer Hochfrequenzschaltung, bei dem fast leeren Behälter 20 eine Echokurve 200, welche die Stärke oder Amplitudenwerte von reflektierten Signalen (y-Achse) in Abhängigkeit von der jeweiligen Distanz d (x-Achse) wiederspiegelt. Die Echokurve 200 kann bei Sensoren nach dem Puls-Laufzeit-Verfahren direkt am Ausgang des Hochfrequenzmoduls oder auch nach einer analogen Vorverarbeitung - beispielsweise durch Filterung, Gleichrichtung, Verstärkung und/oder Logarithmierung - abgegriffen und einem Analog-Digital-Wandler (ADC) zugeführt werden. Bei Sensoren nach dem FMCW-Verfahren wird von einem Hochfrequenzmodul in vielen Fällen ein die einzelnen Reflektionen repräsentierendes analoges niederfrequentes Frequenzgemisch (ZF-Signal) bereitgestellt, welches ebenfalls gefiltert, verstärkt und als Echokurve 200 dem ADC zugeführt werden kann.

Die Echokurve 200 weist eine höchste Amplitude oder ein erstes großes Echo 202 auf, welches durch Reflexionen von der Antenne 110 (z.B. Hornantenne) des Messgerätes 100 erzeugt wurde. Darüber hinaus weist die Echokurve 200 ein höchstes lokales Amplituden-maximum oder Echo 204 auf, welches durch die Reflexion von Hochfrequenzsignalen an einem Behältereinbau 60 erzeugt wurde, sowie ein niedrigstes lokales Amplitudenmaximum oder Echo 206, welches von der Reflexion an einer Oberfläche 40 eines Füllguts 30 hervorgerufen wurde. Zumindest einige Echokurvenauswertealgorithmen können die komplette Echokurve 200 benötigen, um erkennen zu können, dass das Echo 206 von der Füllgutoberfläche 40 hervorgerufen wird, und das Echo 206 zur Bestimmung der Entfernung d zu der Oberfläche 40 des Füllguts 30 herangezogen werden kann. Bei nahezu entleertem Behälter 20 kann das Füllgutecho 206 eine sehr niedrige Amplitude aufweisen. Gleichzeitig kann das Echo 204 des in unmittelbarer Nähe zum Messgerät 100 befindlichen Behältereinbaus 60, der als Reflektor wirkt, eine sehr große Amplitude des Echos 204 aufweisen. Hieraus kann sich die Notwendigkeit ergeben, eine Umwandlung der Echokurve 200 in eine digitale Repräsentation mit einer sehr hohen Genauigkeit durchzuführen, welche es erlaubt, die verhältnismäßig kleine Amplitude des Füllgutechos 206 sicher digital aufzulösen und weiterzuverarbeiten. Das Messgerät 100, insbesondere der im Messgerät 100 integrierte ADC, muss folglich mit einer sehr hohen Quantisierungsgenauigkeit - d.h. einer feinen Amplitudenquantisierung - betrieben werden, beispielsweise mit einer ersten Quantisierung von 14 Bit. Die mit dieser Einstellung einhergehende Verlangsamung der Radarmessung, um die Datenmenge mit Hilfe einer oder mehrerer serieller Schnittstellen in Richtung eines Prozessorsystems übertragen zu können, kann sich - bei geschickter Auslegung - für die beispielhaft dargestellte Applikation dann nicht negativ auswirken, wenn kurze Reaktionszeiten bei nahezu entleertem Behälter nicht erforderlich sind.

**Fig. 1b** zeigt schematisch eine Messung gemäß einer Ausführungsform bei einem nahezu gefüllten Behälter 25. Dabei können, z.B. aufgrund eines Risikos einer Überfüllung des Behälters 25 von dem Füllstandmessgerät 100 sehr schnelle Messzyklen erwartet werden. Das Messgerät 100, insbesondere der im Messgerät integrierte Prozessor, kann den ADC zur Erfassung der Echokurve 200 derart ansteuern, dass die Echokurve 200 beispielsweise mit einer zweiten (gröberen) Quantisierungsgenauigkeit von 12 Bit bestimmt wird. Die mit dieser Einstellung einhergehende Reduktion an Daten kann es erlauben, sowohl die Bestimmung einzelner Datenpunkte als auch deren Übertragung hin zu einem Prozessorsystem zu beschleunigen; hierdurch kann ein Freiheitsgrad gewonnen werden, die Messwiederholrate zu erhöhen. Gleichzeitig kann aus der Kenntnis der Applikation heraus sichergestellt werden, dass mit dieser Reduktion der Bitbreite keine Information verloren geht. Denn bei vollem Behälter 25 können sich potentielle Reflektoren - z.B. die Oberfläche 45 eines Füllguts 30 - allesamt in unmittelbarer Nähe zu dem Füllstandmessgerät 100 befinden; dadurch werden Echos 208 mit einem hohen lokalen Amplitudenmaximum erzeugt, welche auch bei einer Reduktion der Bitbreite bei der Analog-Digital-Wandlung (A/D-Wandlung) sicher erfasst werden können.

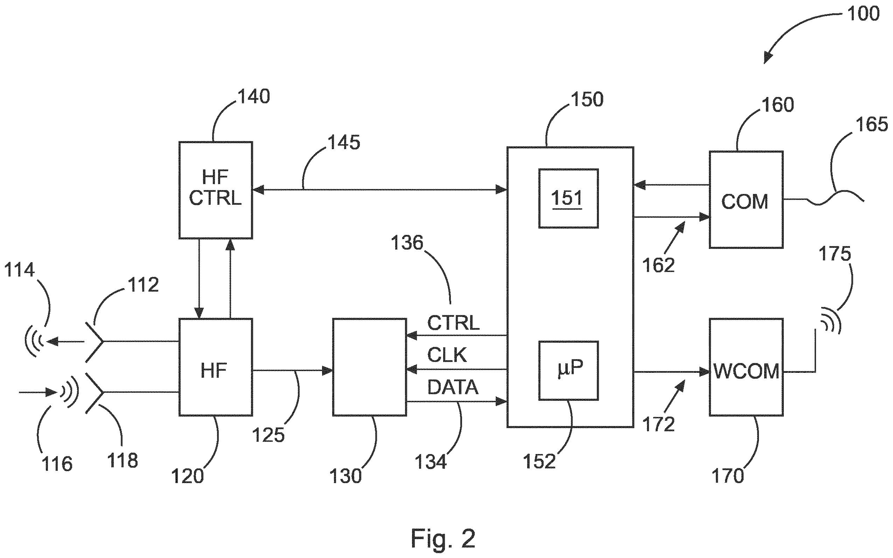

**Fig. 2** zeigt schematisch einen internen Aufbau eines Radarfüllstandmessgerätes 100 gemäß einer Ausführungsform. Eine im Gerät 100 befindliche Hochfrequenzschaltung 120 erzeugt ein Hochfrequenzsignal 114, welches über eine Antenne 112 in Richtung einer Füllgutoberfläche 40, 45 (siehe **Fig. 1a, 1b**) abgestrahlt wird. Die von der Füllgutoberfläche 40, 45 und anderen Reflektoren 60 reflektierten Signalanteile 116 werden von einer Empfangsantenne 118 empfangen und an die Hochfrequenzschaltung 120 weitergeleitet, innerhalb derer die erfassten Signale 116, insbesondere nach einem Puls-Laufzeit-Verfahren oder einem FMCW-Verfahren, in einen niederfrequenteren Bereich (Zwischenfrequenz, ZF-Frequenz) umgesetzt werden. Die Hochfrequenzschaltung 120 wird in dem gezeigten Ausführungsbeispiel durch eine Regelschaltung 140, welche beispielsweise eine Differenzfrequenzregelung oder eine gebrochen ganzzahlige Phasenregelung (PLL, Phase-Locked Loop) beinhalten kann, gesteuert. Die Hochfrequenzschaltung 120 kann über die Regelschaltung 140, welche von einem Prozessor 150 über eine Steuerleitung 145 digital eingestellt werden kann, gesteuert werden. Dadurch kann insbesondere eine Betriebsdauer der Hochfrequenzschaltung 120 - die einen hohen Energiebedarf aufweisen kann - gesteuert und dadurch deren Energiebedarf reduziert werden. Die Hochfrequenzschaltung 120 stellt während der Erfassung der Echosignale 116 eine niederfrequente Repräsentation (z.B. ein ZF-Signal) bereit, welche von einem ADC 130 erfasst und in eine digitale Repräsentation umgesetzt wird. Die Quantisierungsgenauigkeit oder die Genauigkeit der Umsetzung, d.h. die Bitbreite, die Auflösung oder die Breite einer Quantisierungsstufe bei der Erfassung der Amplitudenwerte der analogen Echokurve 200 kann vom Prozessor 150 über eine Steuerleitung 136 vorgegeben werden. Die Auswahl einer passenden Quantisierungsgenauigkeit kann z.B. durch eine im Prozessor integrierte Quantisierungsstufenbestimmungsvorrichtung 152 erfolgen, beispielsweise durch eine dazu eingerichtete Hardware und/oder Software. Das Radarsystem 100 kann z.B. über eine Zweidrahtschnittstelle 165 oder eine Dreidrahtschnittstelle 165 mit Energie versorgt werden. Weiterhin kann diese Schnittstelle von einem Kommunikationsmodul 160 zur Übermittlung von Füllstandwerten in analoger oder digitaler Form verwendet werden. Alternativ oder zusätzlich kann vorgesehen sein, Messwerte über ein Drahtloskommunikationsmodul 170, mittels einer Kommunikationsantenne 175, nach außen hin bereitzustellen. Die Quantisierungsstufenbestimmungsvorrichtung 152 kann zur Bestimmung einer passenden Quantisierungsstufe vorgebbare oder automatisch ermittelte Applikationsinformationen nach dem Prinzip der **Fig. 1** berücksichtigen. Alternativ oder zusätzlich können weitere Kriterien herangezogen werden, die beispielsweise nachfolgend ausgeführt werden.

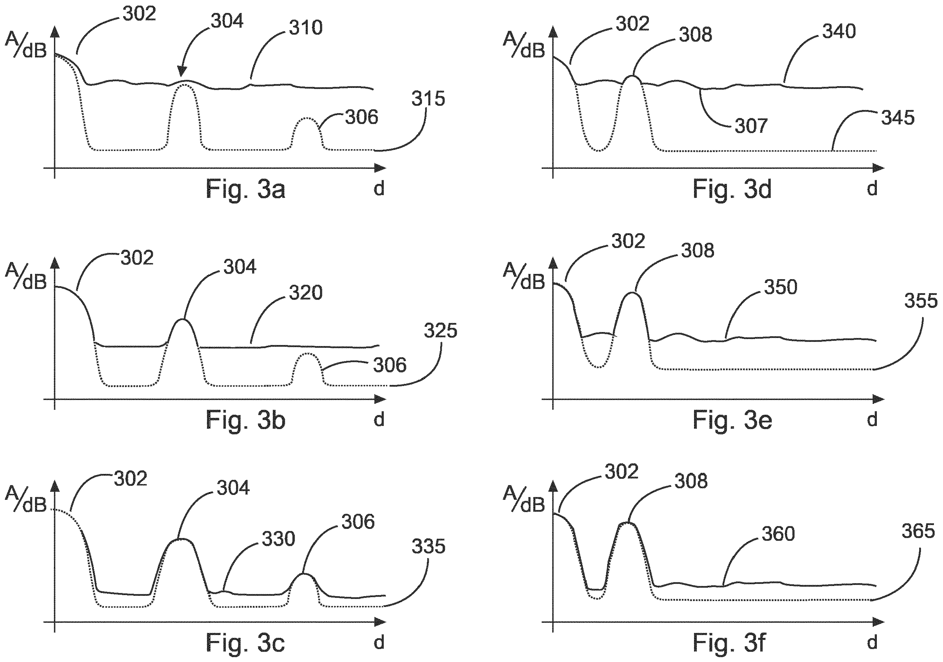

**Fig. 3a** bis **3f** zeigen schematisch Auswirkungen eines Einstellens einer unterschiedlichen Quantisierungsgenauigkeit gemäß einer Ausführungsform. Die Echokurven 310, 320, 330, 340, 350, 360 können z.B. bei einer Überführung einer von einer HF-Schaltung 120 bereitgestellten, niederfrequenten Echokurve 200 erzeugt werden.

Die digitalisierte Echokurve 310 von **Fig. 3a** wird vom ADC 130 (siehe z.B. **Fig. 3**) mit einer ersten Genauigkeit k, beispielsweise einer Amplitudenauflösung von k = 10 Bit, aus der analogen Echokurve 200 (siehe **Fig. 1a**) erzeugt. Die Echokurve 200 ist gepunktet als Echokurve 315 dargestellt, bzw. in **Fig. 3b** bis **3f** als gepunktete Echokurven 325, 335, 345, 355, 365. Es ist deutlich erkennbar, dass weder das Echo 304 noch das Echo 306 von Echokurve 315 in der digitalen Echokurve 310 abgebildet werden. Ein Betrieb des Messgerätes mit einer Amplitudenauflösung von k = 10 Bit führt daher zu fehlerhaften Messungen und ist somit in einer Messsituation wie in **Fig. 1a** gezeigt nicht sinnvoll möglich. Wird die gleiche analoge Echokurve 200, wie in **Fig. 3b** gezeigt, mit einer zweiten Quantisierungsgenauigkeit m, beispielsweise einer Amplitudenauflösung von m = 12 Bit, in eine digitale Repräsentation 320 überführt, so kann das Echo 304 gut aufgelöst werden, wohingegen das eigentliche Füllstandecho 306 von Echokurve 325 aufgrund seiner geringen Amplitude noch immer nicht erfasst werden kann. Für die Messsituation des fast vollen Behälters 20 kann es daher erforderlich sein, über die Quantisierungsstufenbestimmungsvorrichtung 152 den ADC 130 derart anzusteuern, dass dieser die digitale Repräsentation 330 der Echokurve 360 mit einer dritten Quantisierungsgenauigkeit n, beispielsweise mit n = 14 Bit, wie in **Fig. 3c** gezeigt, erfasst. Hierdurch lassen sich alle relevanten Echos 304, 306 sicher erfassen und/oder weiterverarbeiten.

In einer anderen Messsituation, beispielsweise bei einem nahezu gefüllten Behälter 25 (siehe **Fig. 1b**) kann sich das Messgerät 100 anders verhalten. Eine mit einer ersten Amplitudenauflösung von k = 10 Bit digitalisierte Echokurve 340, wie in **Fig. 3d** gezeigt, kann das Füllgutecho 308 bereits korrekt auflösen. Zur Steigerung der Zuverlässigkeit kann ergänzend vorgesehen sein, für das Füllgutecho 308 einen größeren Signal-Rausch-Abstand zu verlangen, wobei das Rauschen durch die Quantisierung bei der A/D-Wandlung definiert werden kann. Bei einer zweiten Amplitudenauflösung von m = 12 Bit, siehe Kurve 350 in **Fig. 3e**, kann anhand der digitalisierten Echokurve 350 eine sehr zuverlässige Vermessung des Füllgutechos 308 erfolgen. Eine weitere Steigerung der Genauigkeit bei der Analog-Digital-Wandlung auf n = 14 Bit, wie sie der Kurve 360 in **Fig. 3f** zugrunde liegt, erzeugt keine zusätzliche Information. Daher kann auf diese feinere Auflösung der Amplitude in der Messsituation von **Fig. 1b** verzichtet werden. Dies kann eine Reduktion des Energiebedarfs zur Folge haben.

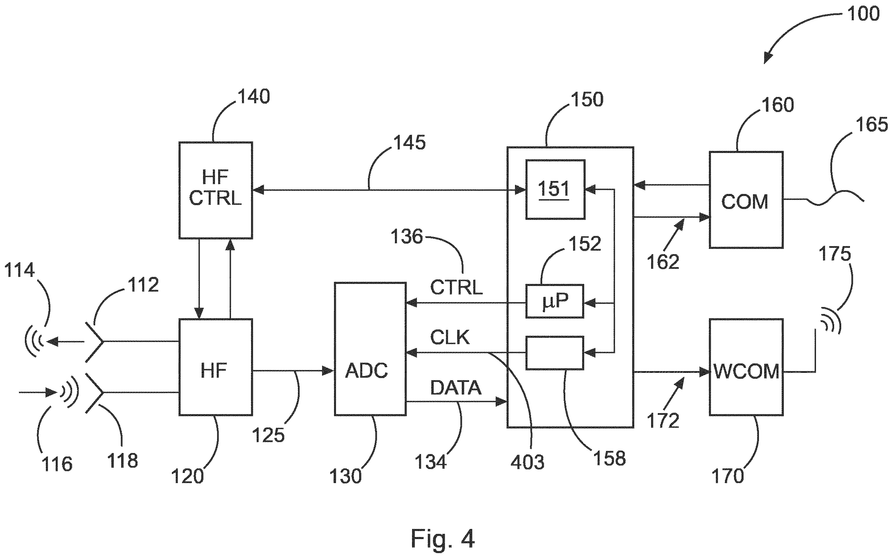

Mit der Reduktion der Bitbreite und damit der Genauigkeit bei der A/D-Wandlung einhergehend kann die Menge an Daten, welche über eine oder mehrere Schnittstellen 134 in Richtung eines Prozessors 150 übertragen werden, reduziert werden. Zudem kann die Wandlung eines analogen Spannungswertes in einen digitalen Messwert insbesondere bei preisgünstigen SAR-ADCs (SAR: Successive-Approximation-Register) bei reduzierter Bitbreite zeitlich schneller erfolgen. Es ist daher eine Ausführungsform der vorliegenden Erfindung, die Abtastfrequenz des Analog-Digital-Wandlers bei einer veränderten Quantisierungsstufe ebenfalls anzupassen. **Fig. 4** zeigt schematisch einen internen Aufbau eines Radarfüllstandmessgerätes 100 gemäß einer weiteren Ausführungsform. Wird von der Quantisierungsstufenbestimmungsvorrichtung 152 eine neue angepasste Quantisierungsgenauigkeit vorgegeben, so kann diese Information an eine Abtasttaktbestimmungseinrichtung 158 weitergereicht werden, innerhalb welcher unter Berücksichtigung des Aufbaus und der Leistungsmerkmale des ADCs 130 eine neue Abtastfrequenz bestimmt wird, welche über eine Taktleitung 403 an den ADC 130 übertragen wird. Hierdurch kann erreicht werden, dass durch die verringerte Dauer der Messung die Betriebsdauer des ADC 130 deutlich reduziert und dadurch Energie eingespart wird. Ergänzend kann vorgesehen sein, die Information über eine veränderte Abtastfrequenz an eine Hochfrequenzparameterbestimmungseinrichtung 151 zu übertragen. Diese ist eingerichtet, passend zu der neuen Abtastfrequenz neue Parameter der Regelschaltung 140 zu ermitteln und an diese zu übertragen, um beispielsweise die Betriebsdauer der Hochfrequenzschaltung 120, und dadurch auch den Energieverbrauch, weiter zu reduzieren. Beispielsweise kann die Einrichtung 151 bei Radargeräten nach einem Puls-Laufzeit-Verfahren die Differenzfrequenz zwischen einem Sendeoszillator und einem internen Referenzoszillator neu festlegen und an die Regelschaltung 140 übermitteln. Bei einem Radargerät nach einem FMCW-Verfahren können insbesondere die Startfrequenz, die Endfrequenz, die Anzahl an Schritten während einer Messung und/oder die Steilheit des Frequenzsweeps von der Bestimmungseinrichtung 151 festgelegt und an die Regelschaltung übermittelt werden.

Es sei an dieser Stelle darauf hingewiesen, dass der ADC 130 inhärenter Bestandteil des Prozessorsystems 150 sein kann. Es kann insbesondere vorgesehen sein, dass das Prozessorsystem 150 einen fest auf seinem Halbleitersubstrat eingebettete Analog-Digital-Wandler 130 aufweist.

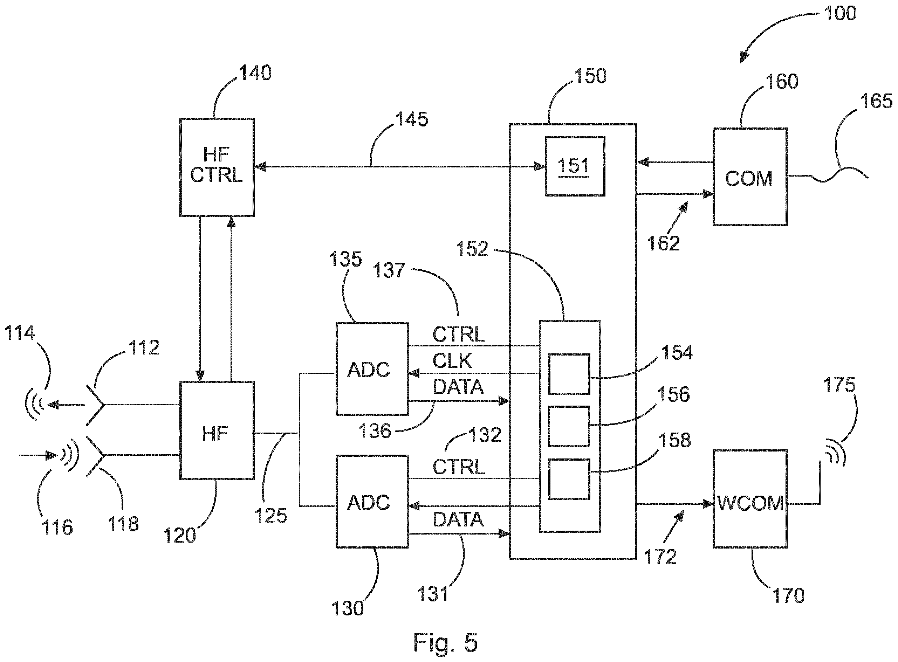

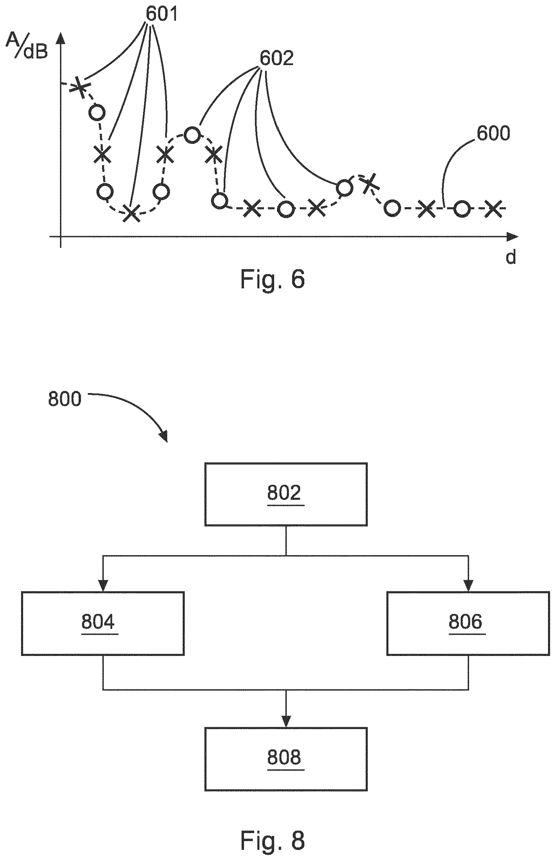

**Fig. 5** zeigt schematisch einen internen Aufbau eines Radarfüllstandmessgerätes 100 gemäß einer weiteren Ausführungsform. Dabei wird der Gedanke einer quantisierungsabhängigen Erhöhung der Abtastfrequenz durch Hinzunahme eines zweiten ADCs 135 weiter fort. Reicht die maximale Abtastfrequenz und/oder die maximale Übertragungsrate eines ersten ADCs 130 nicht aus, eine von der Abtasttaktbestimmungseinrichtung vorgesehene Taktrate zu erreichen, so kann ein zweiter ADC 135 zur Erfassung von Daten alternierend (in einem Interleave-Modus) zu dem ADC 130 hinzugeschaltet werden, und somit die Abtastfrequenz weiter erhöht und die Betriebsdauer der Hochfrequenzschaltung 120 weiter reduziert werden. Der Prozessor 150 weist zu diesem Zweck eine Wandlerkontrollvorrichtung 156 auf, welche dazu eingerichtet ist, mehrere ADCs 130, 135 anzusteuern. Zu diesem Zweck beinhaltet die Wandlerkontrollvorrichtung 156 eine Abtasttaktbestimmungseinrichtung 158, welche dazu eingerichtet ist, auf Basis einer von der Quantisierungsstufenbestimmungsvorrichtung 152 bestimmten notwendigen Quantisierung einen hierzu passsenden Abtasttakt zu bestimmen. Ergibt sich während dieser Bestimmung die Notwendigkeit, einen höheren Abtasttakt einzustellen als dies mit dem primären ADC 130 möglich wäre, aktiviert die Kontrollvorrichtung 156 den sekundären ADC 135, und stellt sowohl diesem ADC 135 als auch dem primären ADC 130 Abtasttakte derart zur Verfügung, dass ein abwechselndes Wandeln der Echokurve in einem der beiden ADC's nach einem Interleave-Schema erfolgt. Hierdurch lässt sich die resultierende Abtastfrequenz im Vergleich zum Ausführungsbeispiel der **Fig. 4** weiter erhöhen. Das Zusammenfügen der von den ADCs 130, 135 gelieferten Daten erfolgt in einer Sortiereinheit 154 nach dem Schema der **Fig. 6****.** Die vom primären ADC 130 gelieferten Abtastwerte X 601 der Echokurve 600 werden durch ein Umsortieren im Speicher des Prozessors alternierend mit den vom sekundären ADC 135 gelieferten Abtastwerten O 602 angeordnet. Aus den Abtastwerten X 601 und O 602 kann die resultierende Echokurve 600 zusammengesetzt werden, welche nach bekannten Verfahren weiter verarbeitet werden kann. Es sei dazu angemerkt, dass abhängig von den Erfordernissen der Messsituation zusätzlich vorgesehen sein kann, den primären ADC und/oder den sekundären ADC im Hinblick auf die für die Überführung der Echokurve 200 in ihre digitale Repräsentation 330 erforderliche Genauigkeit oder Quantisierungsstufe durch geeignete Steuersignale anzusteuern. Weiterhin kann vorgesehen sein, den sekundären ADC 135 wieder zu deaktivieren, wenn die vorgegebene Abtastfrequenz bei einer vorbestimmten Amplitudenauflösung von einem primären ADC 130 selbständig realisiert werden kann.

Ergänzend sei - bezugnehmend auf, aber ohne Einschränkung auf, das Ausführungsbeispiel der **Fig. 5** - darauf hingewiesen, dass der primäre ADC 130 und/oder der sekundäre ADC 135 inhärente Bestandteile des Prozessorsystems 150 sein können. Es kann insbesondere vorgesehen sein, dass das Prozessorsystem 150 mehrere fest auf seinem Halbleitersubstrat eingebettete ADCs 130, 135 aufweist.

Es kann auch vorgesehen sein, einen primären ADC 130 und einen sekundären ADC 135 derart mit Taktsignalen anzusteuern, dass diese ihre jeweiligen Abtastwerte 601, 602 zu gleichen Zeitpunkten ermitteln. Durch eine numerische Bestimmung des Mittelwertes zeitgleich bestimmter Abtastwerte im Prozessor 150 kann hierdurch die Amplitudenauflösung rechnerisch über die technisch von einem einzigen ADC bereitgestellte Auflösung hinaus gesteigert werden.

In einer weiterführenden Ausgestaltung kann weiterhin vorgesehen sein, permanent und/oder situationsabhängig einen dritten ADC (oder weitere ADCs) zur Erfassung in einem Interleave-Modus hinzuzuschalten, und somit die Abtastfrequenz weiter zu erhöhen und die Betriebsdauer der Hochfrequenzschaltung 120 weiter zu reduzieren. Es kann sich hierbei um einen externen ADC handeln, oder auch um einen fest auf dem Halbleitersubstrat des Prozessorsystems 150 eingebetteten ADC.

Wie bereits ausgeführt kann die Quantisierungsstufenbestimmungsvorrichtung 152 zur Bestimmung einer passenden Quantisierungsstufe vorgebbare oder automatisch ermittelte Applikationsinformationen verwenden. Alternativ oder zusätzlich kann auch vorgesehen sein, Charakteristika der im Radarmessgerät 100 verwendeten Komponenten, insbesondere des ADC 130 zu berücksichtigen. Bei zumindest einigen ADCs kann deren Genauigkeit von der benötigten Abtastfrequenz und/oder der bei der Abtastung vorhandenen Umgebungstemperatur abhängen. Ergibt beispielsweise eine im Gerät vorgenommene Temperaturmessung, dass die benötigte Genauigkeit bei der jeweils herrschenden Umgebungstemperatur aufgrund von temperaturabhängigen Bauteiltoleranzen mit einem primären ADC 130 nicht mehr erreicht werden kann, so kann durch eine Hinzunahme eines sekundären ADC 135 und durch eine taktsynchrone Ansteuerung mit anschließender Mittelwertbildung die geforderte Quantisierungsgenauigkeit oder Amplitudenauflösung bei der A/D-Wandlung auch bei hohen Temperaturen sichergestellt werden. Bezugnehmend auf das Ausführungsbeispiel der **Fig. 5** kann alternativ auch vorgesehen sein, die einzustellende Abtastrate in einem einzelnen ADC durch Hinzunahme eines weiteren ADC näherungsweise oder exakt zu halbieren, und somit die Genauigkeit bei der Wandlung zu erhöhen. Es kann auch vorgesehen sein, Alterungseffekte der verbauten Komponenten bei der Einstellung der Quantisierung, der Abtastfrequenz und/oder der Anzahl zu verwendender Analog-Digital-Wandler zu berücksichtigen. Darüber hinaus ist es möglich, in vorgebbaren zeitlichen Abständen die ADCs mit einer veränderten Quantisierungsgenauigkeit zu betreiben, um deren Zuverlässigkeit im Umfeld sicherheitskritischer Anwendungen zyklisch zu verifizieren. Diese Aspekte können auch unter Hinzunahme eines dritten ADCs (oder noch weiterer ADCs) weiter ausgeführt werden.

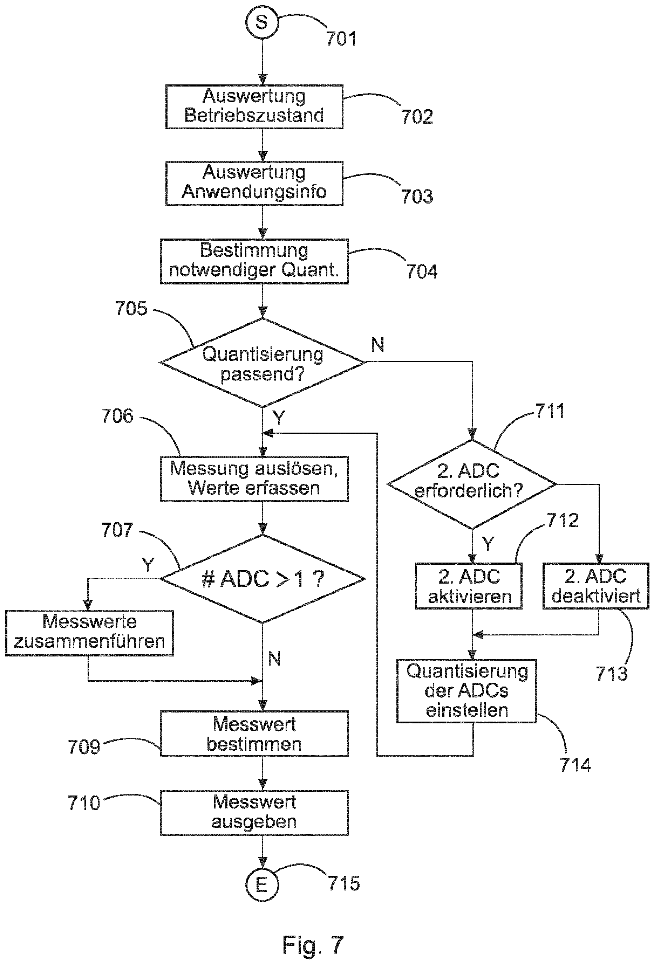

**Fig. 7** zeigt ein Flussdiagramm 700 mit einem Verfahren gemäß einer Ausführungsform. Das Flussdiagramm 700 zeigt insbesondere einen Ablauf während einer ersten Betriebsphase und während einer zweiten Betriebsphase des Radarmessgerätes, wobei mit jedem neuen Messzyklus der gezeigte Ablauf erneut durchlaufen wird. Das Verfahren beginnt in einem Startzustand 701. In einem Schritt 702 wird der aktuelle Betriebszustand des Füllstandmessgerätes ausgewertet. Hierbei können insbesondere Informationen wie der zuletzt ermittelte Messwert, die zuletzt vorhandenen Amplitudenverhältnisse der Echos einer Echokurve, die aktuell zur Verfügung stehende Energie, die Umgebungstemperatur und/oder das Alter des Füllstandmessgerätes ermittelt werden. In einem Schritt 703 werden die Informationen zur Anwendung ermittelt und ausgewertet. Hierbei können insbesondere Vorgaben des Benutzers zur Anwendungssituation wie der Messbereich oder die Reflektivität des Mediums oder auch die Einbausituation des Sensors ermittelt werden. Die in den Schritten 702 und 703 zusammengestellten Informationen werden in einem Schritt 704 von einer Quantisierungsstufenbestimmungsvorrichtung 152 dazu verwendet, die aktuell angepasste Quantisierungsgenauigkeit bei einer A/D-Wandlung der Echokurve zu bestimmen. In einem Schritt 705 wird überprüft, ob der ADC 130 bereits passend zur Messung mit der angepassten Quantisierungsgenauigkeit eingestellt ist. Ist dies nicht der Fall, so wird in einem Schritt 711 zunächst überprüft, ob die gewünschte Genauigkeit die Verwendung eines sekundären Analog-Digital-Wandlers 135 erforderlich macht. Falls dies erforderlich ist, wird in einem Schritt 712 der sekundäre ADC 135 aktiviert. Andernfalls wird dieser in einem Schritt 713 deaktiviert. In einem daran anschließenden Verfahrensschritt 714 werden die ADCs 130, 135 durch Bereitstellung entsprechend ausgeführter Ansteuersignale auf die benötigte Genauigkeit hin eingestellt. In einem Schritt 706 wird die Hochfrequenzschaltung 120 aktiviert, um eine Messung auszulösen und die bereitgestellten analogen Echosignale oder Echokurven 200 in ihre digitale Repräsentation zu überführen. Nach Abschluss der Messung wird in einem Schritt 707 überprüft, ob die Messdaten von einem einzigen ADC 130 bereitgestellt worden waren. Ist dies nicht der Fall, so werden in einem Schritt 708 die Messwerte 601 des primären ADC 130 und die Messwerte 602 des sekundären ADC 135 in einem Speicher, z.B. eines Prozessors des Feldgeräts, zusammengeführt. Anschließend wird in einem Schritt 709 auf Basis der digitalen Repräsentation der Echokurve 200 der Füllstand-Messwert ermittelt und in einem Schritt 710 in analoger und/oder digitaler Art über drahtgebundene Kommunikationsschnittstellen 165 oder drahtlose Schnittstellen 175 nach außen hin bereitgestellt. Das Verfahren endet in einem Zustand 715.

**Fig. 8** zeigt ein Flussdiagramm 800 mit einem Verfahren gemäß einer weiteren Ausführungsform. In einem Schritt 802 werden Amplitudenwerte einer Echokurve 200 (siehe z.B. **Fig. 1a, 1b**) des Füllstandradars mittels eines Analog-Digital-Wandlers, ADC, erfasst. In einem Schritt 804 wird ein erster Amplitudenwert eines ersten Echos bestimmt, das eine höchste Amplitude oder ein höchstes lokales Amplitudenmaximum der Echokurve aufweist. In einem Schritt 806, der vor, nach oder parallel zu dem Schritt 804 durchgeführt wird, wird ein zweiter Amplitudenwert eines zweiten Echos bestimmt, das ein niedrigstes lokales Amplituden-maximum der Echokurve aufweist. In einem Schritt 808 wird eine angepasste Quantisierungsgenauigkeit als Funktion eines Quotienten aus dem ersten Amplitudenwert und dem zweiten Amplitudenwert eingestellt.

### Liste der Bezugszeichen

- 20: fast leerer Behälter
- 25: nahezu gefüllter Behälter
- 30: Füllgut
- 40: Füllgutoberfläche des fast leereren Behälters
- 45: Füllgutoberfläche des nahezu gefüllten Behälters
- 60: Behältereinbau, Reflektoren
- 100: Füllstandmessgerät, Füllstandradar
- 110: Antenne
- 112: Sendeantenne
- 114: Hochfrequenzsignale
- 116: Echosignale
- 118: Empfangsantenne
- 120: Hochfrequenzschaltung
- 130: ADC, Analog-Digital-Wandler
- 134: Schnittstellen
- 135: weiterer ADC, Analog-Digital-Wandler
- 136: Steuerleitung
- 140: Regelschaltung
- 145: Steuerleitung
- 150: Prozessor, Prozessorsystem
- 151: Hochfrequenzparameterbestimmungseinrichtung
- 152: Quantisierungsstufenbestimmungsvorrichtung
- 154: Sortiereinheit
- 156: Wandlerkontrollvorrichtung
- 158: Abtasttaktbestimmungseinrichtung
- 160: Kommunikationsmodul
- 165: Kommunikationsschnittstellen, z.B. Zweidrahtschnittstelle
- 170: Drahtloskommunikationsmodul
- 175: Kommunikationsantenne
- 200: Echokurve
- 202, 204, 206, 208: Echos
- 302, 304, 306, 308: Echos
- 310 - 360: Echokurven
- 315 - 365: Echokurven
- 403: Taktleitung
- 600: Echokurve
- 601: Abtastwerte X
- 602: Abtastwerte O
- 700: Flussdiagramm
- 701 - 715: Schritte
- 800: Flussdiagramm
- 802 - 808: Schritte

## Patentansprüche

1. Verfahren zum Einstellen einer Amplituden-Quantisierungsgenauigkeit eines Füllstandradars (100) zum Ermitteln eines Füllstands (40, 45) eines Behälters (20, 25), mit den Schritten:
erfassen von Amplitudenwerten einer Echokurve (200) des Füllstandradars (100) mittels eines Analog-Digital-Wandlers, ADC (130);
bestimmen eines ersten Amplitudenwerts eines ersten Echos, das eine höchste Amplitude (202) oder ein höchstes lokales Amplitudenmaximum (204, 208) der Echokurve (200) aufweist;
bestimmen eines zweiten Amplitudenwerts eines zweiten Echos, das ein niedrigstes lokales Amplitudenmaximum (206) der Echokurve (200) aufweist; und
einstellen einer angepassten Amplituden-Quantisierungsgenauigkeit als Funktion eines Quotienten aus dem ersten Amplitudenwert und dem zweiten Amplitudenwert,
um mit der angepassten Amplituden-Quantisierungsgenauigkeit den Füllstand (40, 45) des Behälters (20, 25) zu ermitteln.

2. Verfahren nach Anspruch 1,
wobei das Erfassen der Amplitudenwerte mit einer maximalen Amplituden-Quantisierungsgenauigkeit des ADC durchgeführt wird.

3. Verfahren nach Anspruch 1,
wobei das Erfassen der Echokurve (200) mit der angepassten Amplituden-Quantisierungsgenauigkeit des letzten Einstellens des ADC durchgeführt wird.

4. Verfahren nach einem der vorhergehenden Ansprüche,
wobei eine Verarbeitungsstrecke und/oder eine Übertragungsstrecke mit der angepassten Amplituden-Quantisierungsgenauigkeit betrieben wird.

5. Verfahren nach einem der vorhergehenden Ansprüche,
wobei die Übertragungsstrecke drahtgebunden und/oder drahtlos ausgeführt ist.

6. Verfahren nach einem der vorhergehenden Ansprüche,
wobei die angepasste Amplituden-Quantisierungsgenauigkeit eine logarithmische Funktion des Quotienten ist.

7. Verfahren nach einem der vorhergehenden Ansprüche,
wobei die angepasste Amplituden-Quantisierungsgenauigkeit eine Funktion einer Distanz zwischen einer Anzahl von führenden Nullen des ersten Amplitudenwertes und einer Anzahl von führenden Nullen des zweiten Amplitudenwertes ist.

8. Verfahren nach einem der vorhergehenden Ansprüche,
wobei das Erfassen der Echokurve (200) alternierend mittels eines ersten ADC und eines zweiten ADC zeitlich alternierend durchgeführt wird.

9. Verfahren nach einem der vorhergehenden Ansprüche,
wobei der ADC ein Zwischenfrequenzsignal mit Amplitudenwerten der Echokurve (200) des Füllstandradars (100) erfasst.

10. Verfahren nach einem der vorhergehenden Ansprüche,
wobei das Füllstandradar (100) ein Puls-Laufzeit-Verfahren und/oder ein Dauerstrichradar-Verfahren verwendet.

11. Feldgerät, aufweisend ein Füllstandradar (100) und/oder ein Ultraschallmessgerät, das dazu eingerichtet ist, ein Verfahren nach einem der vorhergehenden Ansprüche durchzuführen.

12. Verwendung eines Feldgeräts nach dem vorhergehenden Anspruch zur Messung eines Füllstands und/oder zur Bestimmung einer Topologie eines Füllguts.

13. Programmelement, welches, wenn es auf einer Recheneinheit eines Feldgeräts und/oder auf einer anderen Recheneinheit ausgeführt wird, die Recheneinheit anweist, das Verfahren nach einem der Ansprüche 1 bis 10 durchzuführen.

14. Computerlesbares Medium, auf dem ein Programmelement nach dem vorhergehenden Anspruch gespeichert ist.

## Claims

1. A method for adjusting an amplitude quantization accuracy of a fill level radar (100) for detecting a fill level (40, 45) of a container (20, 25), comprising the steps of:
capturing amplitude values of an echo curve (200) of the fill level radar (100) by means of an analog-to-digital converter, ADC (130);
determining a first amplitude value of a first echo having a highest amplitude (202) or a highest local amplitude maximum (204, 208) of the echo curve (200);
determining a second amplitude value of a second echo having a lowest local amplitude maximum (206) of the echo curve (200); and
setting an adjusted amplitude quantization accuracy as a function of a quotient of the first amplitude value and the second amplitude value,
to determine the fill level (40, 45) of the container (20, 25) with the adjusted amplitude quantization accuracy.

2. The method according to claim 1,
wherein the capturing of the amplitude values is performed with a maximum amplitude quantization accuracy of the ADC.

3. The method according to claim 1,
wherein the capturing of the echo curve (200) is performed with the adjusted amplitude quantization accuracy of the last adjustment of the ADC.

4. The method according to any one of the preceding claims,
wherein a processing link and/or a transmission link is operated with the matched amplitude quantization accuracy.

5. The method according to any one of the preceding claims,
wherein the transmission path is wired and/or wireless.

6. The method according to any one of the preceding claims,
where the fitted amplitude quantization accuracy is a logarithmic function of the quotient.

7. The method according to any one of the preceding claims,
wherein the adjusted amplitude quantization accuracy is a function of a distance between a number of leading zeros of the first amplitude value and a number of leading zeros of the second amplitude value.

8. The method according to any one of the preceding claims,
wherein the capturing of the echo curve (200) is performed alternately in time by means of a first ADC and a second ADC.

9. The method according to any one of the preceding claims,
wherein the ADC detects an intermediate frequency signal having amplitude values of the echo curve (200) of the fill level radar (100).

10. The method according to any one of the preceding claims,
wherein the fill level radar (100) uses a pulse transit time method and/or a continuous wave radar method.

11. A field device comprising a fill level radar (100) and/or an ultrasonic measuring device configured to perform a method according to any one of the preceding claims.

12. Use of a field device according to the preceding claim for measuring a fill level and/or determining a topology of a filling material.

13. A program element which, when executed on a computing unit of a field device and/or on another computing unit, instructs the computing unit to perform the method of any one of claims 1 to 10.

14. A computer-readable medium on which a program element according to the preceding claim is stored.

## Revendications

1. Procédé de réglage d'une précision de quantification d'amplitude d'un radar de niveau de remplissage (100) pour déterminer un niveau de remplissage (40, 45) d'un récipient (20, 25), comportant les étapes consistant à :
acquérir des valeurs d'amplitude d'une courbe d'écho (200) du radar de niveau de remplissage (100) au moyen d'un convertisseur analogique-numérique, ADC (130) ;
déterminer une première valeur d'amplitude d'un premier écho qui présente une amplitude la plus élevée (202) ou un maximum local d'amplitude le plus élevé (204, 208) de la courbe d'écho (200) ;
déterminer une deuxième valeur d'amplitude d'un deuxième écho qui présente un maximum local d'amplitude le plus bas (206) de la courbe d'écho (200) ; et
régler une précision de quantification d'amplitude ajustée en fonction d'un quotient de la première valeur d'amplitude et de la deuxième valeur d'amplitude,
pour déterminer le niveau de remplissage (40, 45) du récipient (20, 25) avec la précision de quantification d'amplitude ajustée.

2. Procédé selon la revendication 1,
dans lequel l'acquisition des valeurs d'amplitude est effectuée avec une précision de quantification d'amplitude maximale de l'ADC.

3. Procédé selon la revendication 1,
dans lequel l'acquisition de la courbe d'écho (200) est effectuée avec la précision de quantification d'amplitude ajustée du dernier réglage de l'ADC.

4. Procédé selon l'une des revendications précédentes,
dans lequel une liaison de traitement et/ou une liaison de transmission est exploitée avec la précision de quantification d'amplitude ajustée.

5. Procédé selon l'une des revendications précédentes,
dans lequel la liaison de transmission est réalisée par fil et/ou sans fil.

6. Procédé selon l'une des revendications précédentes,
dans lequel la précision de quantification d'amplitude ajustée est une fonction logarithmique du quotient.

7. Procédé selon l'une des revendications précédentes,
dans lequel la précision de quantification d'amplitude ajustée est une fonction d'une distance entre un nombre de zéros de tête de la première valeur d'amplitude et un nombre de zéros de tête de la deuxième valeur d'amplitude.

8. Procédé selon l'une des revendications précédentes,
dans lequel l'acquisition de la courbe d'écho (200) est effectuée en alternance au moyen d'un premier ADC et d'un deuxième ADC, de manière alternée dans le temps.

9. Procédé selon l'une des revendications précédentes,
dans lequel l'ADC acquiert un signal de fréquence intermédiaire avec des valeurs d'amplitude de la courbe d'écho (200) du radar de niveau de remplissage (100).

10. Procédé selon l'une des revendications précédentes,
dans lequel le radar de niveau de remplissage (100) utilise une méthode de temps de vol d'impulsions et/ou une méthode de radar à onde continue.

11. Appareil de terrain, présentant un radar de niveau de remplissage (100) et/ou un appareil de mesure à ultrasons conçu pour mettre en œuvre un procédé selon l'une des revendications précédentes.

12. Utilisation d'un appareil de terrain selon la revendication précédente pour mesurer un niveau de remplissage et/ou pour déterminer une topologie d'un produit de remplissage.

13. Élément de programme qui, lorsqu'il est exécuté sur une unité de calcul d'un appareil de terrain et/ou sur une autre unité de calcul, ordonne à l'unité de calcul de mettre en œuvre le procédé selon l'une des revendications 1 à 10.

14. Support lisible par ordinateur sur lequel est enregistré un élément de programme selon la revendication précédente.
